# EUROPEAN PATENT APPLICATION

(11) **EP 4 358 595 A1**
(43) Date of publication of application: **24.04.2024**
(21) Application number: 22836844.5
(22) Date of filing: 04.07.2022
(51) Int. Cl.: H04W 48/16, H04W 68/00

(54) **METHOD AND APPARATUS FOR PERFORMING ONLINE SUBSCRIPTION**

(30) Priority: 07.07.2021 CN 202110768279
(71) Applicant: Huawei Technologies Co., Ltd., Shenzhen, Guangdong 518129 (CN)
(72) Inventor: XU, Yishan, Shenzhen, Guangdong 518129 (CN); ZHU, Hualin, Shenzhen, Guangdong 518129 (CN); ZHU, Haoren, Shenzhen, Guangdong 518129 (CN)
(74) Representative: Gill Jennings & Every LLP
(86) International application number: PCT/CN2022/103593
(87) International publication number: WO 2023/280093

(57) **Abstract**

This application provides a method for performing onboarding. The method includes: A first core network device obtains first information, where the first information indicates that a terminal device performs onboarding, the first core network device is a core network device that serves the terminal device after the terminal device performs handover, and the first core network device supports an onboarding function. The first core network device performs onboarding on the terminal device based on the first information. According to the solutions of this application, after the terminal device performs handover, a core network device that serves the terminal device is the first core network device, and the first core network device supports the onboarding function. After the terminal device performs handover, the core network device that serves the terminal device may not support the onboarding function. Therefore, according to the solutions of this application, the first core network device may continue to perform onboarding on the terminal device.

## Description

This application claims priority to Chinese Patent Application No. 202110768279.8, filed with the China National Intellectual Property Administration on July 7, 2021 and entitled "METHOD FOR PERFORMING ONBOARDING AND APPARATUS", which is incorporated herein by reference in its entirety.

### TECHNICAL FIELD

This application relates to the field of communication technologies, and more specifically, to a method for performing onboarding and an apparatus.

### BACKGROUND

After a terminal device accesses an onboarding network, a device in the onboarding network may perform onboarding on the terminal device according to an onboarding policy. When the device in the onboarding network cannot serve the terminal device, or when the onboarding network needs to replace the device serving the terminal device due to factors such as load balancing and a radio resource status, the terminal device needs to perform handover, and another device in the onboarding network serves the terminal device. However, the another device in the onboarding network may be unable to perform onboarding on the terminal device. Therefore, how to enable the onboarding network to still perform onboarding on the terminal device after the terminal device performs handover is an urgent issue to be resolved.

### SUMMARY

This application provides a method for performing onboarding and an apparatus.

According to a first aspect, a method for performing onboarding is provided. The method includes:
A first core network device obtains first information, where the first information indicates that a terminal device performs onboarding, the first core network device is a core network device that serves the terminal device after the terminal device performs handover, and the first core network device supports an onboarding function. The first core network device performs onboarding on the terminal device based on the first information.

According to the solutions of this application, after the terminal device performs handover, a core network device that serves the terminal device is the first core network device, and the first core network device supports the onboarding function. After the terminal device performs handover, a core network device that serves the terminal device may not support the onboarding function. Therefore, according to the solutions of this application, the first core network device may continue to perform onboarding on the terminal device.

With reference to the first aspect, in some implementations of the first aspect, that a first core network device obtains first information includes:
The first core network device obtains the first information from a second core network device, where the second core network device is a core network device that serves the terminal device before the terminal device performs handover; the first core network device obtains the first information from a first access network device, where the first access network device is an access network device that serves the terminal device after the terminal device performs handover; the first core network device obtains the first information from the terminal device; or the first core network device obtains the first information from a third core network device, where the third core network device is a core network device initially selected when the terminal device performs handover, and the third core network device does not support an onboarding function.

With reference to the first aspect, in some implementations of the first aspect, the first information includes one or more of the following: data network name information, network slice information, and information about a first value. The first value indicates duration in which the terminal device has registered with a network, or the first value indicates remaining duration in which the terminal device is allowed to register with a network.

It should be understood that in a possible implementation, after registering with an onboarding network, the terminal device establishes a specific session by using a specific data network name and/or a specific network slice, and the session is limited to performing only onboarding.

Therefore, according to the solutions of this application, the data network name information, the network slice information, and the information about the first value may all implicitly indicate the terminal device to perform onboarding.

With reference to the first aspect, in some implementations of the first aspect, when the first information includes the information about the first value, the method further includes:
The first core network device starts a first timer, where a start value of the first timer is the first value.

When a value of the first timer increases to a first threshold, the first core network device performs a deregistration procedure of the terminal device, where the value of the first timer indicates the duration in which the terminal device has registered with the network; or when a value of the first timer decreases to a second threshold, the first core network device performs a deregistration procedure of the terminal device, where the value of the first timer indicates the remaining duration in which the terminal device is allowed to register with the network.

According to the solutions of this application, the first core network device may start the first timer by using the first value as the start value, and when the first timer expires, perform the deregistration procedure of the terminal device, so as to prevent the terminal device from always registering with the onboarding network, and improve network resource utilization.

With reference to the first aspect, in some implementations of the first aspect, the method further includes:
The first core network device starts a second timer; and when a value of the second timer increases to a first threshold or decreases to a second threshold, the first core network device performs a deregistration procedure of the terminal device.

According to the solutions of this application, the first core network device may start the second timer, and when the second timer expires, perform the deregistration procedure of the terminal device, so as to prevent the terminal device from always registering with the onboarding network, and improve network resource utilization.

It should be understood that the first timer and the second timer are specific deregistration timers.

With reference to the first aspect, in some implementations of the first aspect, information about the first threshold and/or information about the second threshold are/is preconfigured. Alternatively, the method further includes: The first core network device obtains second information from the second core network device, where the second information indicates the first threshold and/or the second threshold.

With reference to the first aspect, in some implementations of the first aspect, the first core network device is an access and mobility management function device.

With reference to the first aspect, in some implementations of the first aspect, the second core network device is an access and mobility management function device.

It should be understood that, with reference to the first aspect, in some implementations of the first aspect, the first core network device may alternatively be a session management function device.

It should be understood that, with reference to the first aspect, in some implementations of the first aspect, the second core network device may alternatively be a session management function device.

With reference to the first aspect, in some implementations of the first aspect, when the first core network device and the second core network device are session management function devices, the first core network device starts the first timer, where the start value of the first timer may be the first value; and when a value of the first timer increases to the first threshold, the first core network device performs a session release procedure of the terminal device, where the value of the first timer indicates the duration of a session established by the terminal device. Alternatively, when a value of the first timer decreases to the second threshold, the first core network device performs a session release procedure of the terminal device, where the value of the first timer indicates the remaining duration in which the terminal device is allowed to establish a session.

With reference to the first aspect, in some implementations of the first aspect, the method further includes:
When the first core network device and the second core network device are session management function devices, the first core network device starts the second timer. When a value of the second timer increases to the first threshold or decreases to the second threshold, the first core network device performs a session release procedure of the terminal device.

According to the solutions of this application, the first core network device may start the second timer, and when the second timer expires, perform the session release procedure of the terminal device, so as to prevent the terminal device from always keeping a session in a network, and improve network resource utilization.

It should be understood that when both the first core network device and the second core network device are session management function devices, the first timer and the second timer are specific session release timers.

It should be understood that, with reference to the first aspect, in some implementations of the first aspect, when the first core network device and the second core network device are session management function devices, the first value indicates duration of a session established by the terminal device, or the first value indicates remaining duration in which the terminal device is allowed to establish a session, and the first threshold indicates a longest time of a session that can be established by the terminal device. In a possible implementation, the second threshold may be zero.

According to a second aspect, a method for performing onboarding is provided. The method includes:
A second core network device selects a first core network device based on third information, where the third information indicates that a terminal device performs onboarding, and the first core network device supports an onboarding function. The second core network device is a core network device that serves the terminal device before the terminal device performs handover, and the first core network device is a core network device that serves the terminal device after the terminal device performs handover. The second core network device sends first information to the first core network device, where the first information indicates that the terminal device performs onboarding, so that the first core network device performs onboarding on the terminal device based on the first information.

According to the solutions of this application, when the terminal device performs handover, the second core network device learns that the terminal device performs onboarding, and further selects the first core network device that supports the onboarding function. When the terminal device performs handover, a core network device selected by the second core network device may not support the onboarding function. Therefore, according to the solutions of this application, the first core network device may continue to perform onboarding on the terminal device.

With reference to the second aspect, in some implementations of the second aspect, the third information includes one or more of the following: registration type information, data network name information, network slice information, and information about a first value. The first value indicates duration in which the terminal device has registered with a network, or the first value indicates remaining duration in which the terminal device is allowed to register with a network.

Alternatively, the method further includes:
The second core network device obtains the third information from a second access network device or the terminal device, where the second access network device is an access network device that serves the terminal device before the terminal device performs handover.

With reference to the second aspect, in some implementations of the second aspect, the first information includes one or more of the following: data network name information, network slice information, and the information about the first value.

The first value indicates the duration in which the terminal device has registered with the network, or the first value indicates the remaining duration in which the terminal device is allowed to register with the network.

With reference to the second aspect, in some implementations of the second aspect, the first core network device is an access and mobility management function device.

With reference to the second aspect, in some implementations of the second aspect, the second core network device is an access and mobility management function device.

It should be understood that, with reference to the second aspect, in some implementations of the second aspect, the first core network device may alternatively be a session management function device.

It should be understood that, with reference to the second aspect, in some implementations of the second aspect, the second core network device may alternatively be a session management function device.

It should be understood that, with reference to the second aspect, in some implementations of the second aspect, when the first core network device and the second core network device are session management function devices, the first value indicates duration of a session established by the terminal device, or the first value indicates remaining duration in which the terminal device is allowed to establish a session.

According to a third aspect, a method for performing onboarding is provided. The method includes:
A first access network device obtains fourth information from a terminal device, where the fourth information indicates that the terminal device performs onboarding. The first access network device selects a first core network device based on the fourth information, where the first core network device supports an onboarding function.

The first access network device is an access network device that serves the terminal device after the terminal device performs handover.

According to the solutions of this application, when the terminal device performs handover, the first access network device learns that the terminal device performs onboarding, and further selects the first core network device that supports the onboarding function. When the terminal device performs handover, a core network device selected by the first access network device may not support the onboarding function. Therefore, according to the solutions of this application, the first core network device may continue to perform onboarding on the terminal device.

With reference to the third aspect, in some implementations of the third aspect, the method further includes: The first access network device sends first information to the first core network device, where the first information indicates that the terminal device performs onboarding.

With reference to the third aspect, in some implementations of the third aspect, the first core network device is an access and mobility management function device.

It should be understood that, with reference to the third aspect, in some implementations of the third aspect, the first core network device may alternatively be a session management function device.

According to a fourth aspect, a method for performing onboarding is provided. The method includes:
A third core network device obtains fifth information, where the fifth information indicates that a terminal device performs onboarding, the third core network device is a core network device initially selected when the terminal device performs handover, and the third core network device does not support an onboarding function. The third core network device determines a first core network device based on the fifth information, where the first core network device supports the onboarding function.

According to the solutions of this application, when the terminal device performs handover, the third core network device selected by a first access network device may not support the onboarding function. In this case, the third core network device learns that the terminal device performs onboarding, and further determines the first core network device that supports the onboarding function.

With reference to the fourth aspect, in some implementations of the fourth aspect, that a third core network device obtains fifth information includes: The third core network device obtains the fifth information from a second core network device, where the second core network device is a core network device that serves the terminal device before the terminal device performs handover.

With reference to the fourth aspect, in some implementations of the fourth aspect, the fifth information includes one or more of the following: data network name information, network slice information, and information about a first value.

The first value indicates duration in which the terminal device has registered with a network, or the first value indicates remaining duration in which the terminal device is allowed to register with a network.

With reference to the fourth aspect, in some implementations of the fourth aspect, that a third core network device obtains fifth information includes: The third core network device obtains the fifth information from the terminal device.

With reference to the fourth aspect, in some implementations of the fourth aspect, the determining a first core network device includes:

The third core network device determines the first core network device based on preconfigured capability information of at least one core network device.

With reference to the fourth aspect, in some implementations of the fourth aspect, the method further includes:
The third core network device sends a first request message to a fourth core network device, where the first request message is used to request to obtain information about a core network device supporting the onboarding function. The third core network device receives a first response message from the fourth core network device, where the first response message includes information about the first core network device.

The determining a first core network device includes:
The third core network device determines the first core network device based on the first response message.

With reference to the fourth aspect, in some implementations of the fourth aspect, the information about the first core network device includes identification information of the first core network device and/or address information of the first core network device.

With reference to the fourth aspect, in some implementations of the fourth aspect, the method further includes: The third core network device sends first information to the first core network device, where the first information indicates that the terminal device performs onboarding.

With reference to the fourth aspect, in some implementations of the fourth aspect, the first information includes one or more of the following: data network name information, network slice information, and the information about the first value.

The first value indicates the duration in which the terminal device has registered with the network, or the first value indicates the remaining duration in which the terminal device is allowed to register with the network.

With reference to the fourth aspect, in some implementations of the fourth aspect, the first core network device is an access and mobility management function device.

With reference to the fourth aspect, in some implementations of the fourth aspect, the second core network device is an access and mobility management function device.

With reference to the fourth aspect, in some implementations of the fourth aspect, the third core network device is an access and mobility management function device.

With reference to the fourth aspect, in some implementations of the fourth aspect, the fourth core network device is a network storage function device.

It should be understood that, with reference to the fourth aspect, in some implementations of the fourth aspect, the first core network device may alternatively be a session management function device.

It should be understood that, with reference to the fourth aspect, in some implementations of the fourth aspect, the second core network device may alternatively be a session management function device.

It should be understood that, with reference to the fourth aspect, in some implementations of the fourth aspect, the third core network device may alternatively be a session management function device.

It should be understood that, with reference to the fourth aspect, in some implementations of the fourth aspect, when the first core network device, the second core network device, and the third core network device are session management function devices, the first value indicates duration of a session established by the terminal device, or the first value indicates remaining duration in which the terminal device is allowed to establish a session.

According to a fifth aspect, a communication device is provided. The communication device includes units configured to perform the method in the first aspect or the implementations of the first aspect.

According to a sixth aspect, a communication device is provided. The communication device includes units configured to perform the method in the second aspect or the implementations of the second aspect.

According to a seventh aspect, a first access network device is provided. The first access network device includes:
a transceiver unit, configured to obtain fourth information from a terminal device, where the fourth information indicates that the terminal device performs onboarding; and a processing unit, configured to select a first core network device based on the fourth information, where the first core network device supports an onboarding function. The first access network device is an access network device that serves the terminal device after the terminal device performs handover.

With reference to the seventh aspect, in some implementations of the seventh aspect, the transceiver unit is further configured to send first information to the first core network device, where the first information indicates that the terminal device performs onboarding.

With reference to the seventh aspect, in some implementations of the seventh aspect, the first core network device is an access and mobility management function.

It should be understood that, with reference to the seventh aspect, in some implementations of the seventh aspect, the first core network device may alternatively be a session management function device.

According to an eighth aspect, a third core network device is provided. The third core network device includes:
a transceiver unit, configured to obtain fifth information, where the fifth information indicates that a terminal device performs onboarding, the third core network device is a core network device initially selected when the terminal device performs handover, and the third core network device does not support an onboarding function; and a processing unit, configured to determine a first core network device based on the fifth information, where the first core network device supports the onboarding function.

With reference to the eighth aspect, in some implementations of the eighth aspect, that the transceiver unit is configured to obtain fifth information includes:

The transceiver unit is configured to obtain the fifth information from a second core network device, where the second core network device is a core network device that serves the terminal device before the terminal device performs handover.

With reference to the eighth aspect, in some implementations of the eighth aspect, the fifth information includes one or more of the following: data network name information, network slice information, and information about a first value.

The first value indicates duration in which the terminal device has registered with a network, or the first value indicates remaining duration in which the terminal device is allowed to register with a network.

With reference to the eighth aspect, in some implementations of the eighth aspect, that the transceiver unit is configured to obtain fifth information includes: the transceiver unit is configured to obtain the fifth information from the terminal device.

With reference to the eighth aspect, in some implementations of the eighth aspect, the determining a first core network device includes:
The processing unit is further configured to determine the first core network device based on preconfigured capability information of at least one core network device.

With reference to the eighth aspect, in some implementations of the eighth aspect, the transceiver unit is further configured to send a first request message to a fourth core network device, where the first request message is used to request to obtain information about a core network device supporting the onboarding function. The transceiver unit is further configured to receive a first response message from the fourth core network device, where the first response message includes information about the first core network device.

The determining a first core network device includes:
The processing unit is further configured to determine the first core network device based on the first response message.

With reference to the eighth aspect, in some implementations of the eighth aspect, the transceiver unit is further configured to send first information to the first core network device, where the first information indicates that the terminal device performs onboarding.

With reference to the eighth aspect, in some implementations of the eighth aspect, the information about the first core network device includes identification information of the first core network device and/or address information of the first core network device.

With reference to the eighth aspect, in some implementations of the eighth aspect, the first information includes one or more of the following: data network name information, network slice information, and the information about the first value.

The first value indicates the duration in which the terminal device has registered with the network, or the first value indicates the remaining duration in which the terminal device is allowed to register with the network.

With reference to the eighth aspect, in some implementations of the eighth aspect, the first core network device is an access and mobility management function device.

With reference to the eighth aspect, in some implementations of the eighth aspect, the second core network device is an access and mobility management function device.

With reference to the eighth aspect, in some implementations of the eighth aspect, the third core network device is an access and mobility management function device.

With reference to the eighth aspect, in some implementations of the eighth aspect, the fourth core network device is a network storage function device.

It should be understood that, with reference to the eighth aspect, in some implementations of the eighth aspect, the first core network device may alternatively be a session management function device.

It should be understood that, with reference to the eighth aspect, in some implementations of the eighth aspect, the second core network device may alternatively be a session management function device.

It should be understood that, with reference to the eighth aspect, in some implementations of the eighth aspect, the third core network device may alternatively be a session management function device.

It should be understood that, with reference to the eighth aspect, in some implementations of the eighth aspect, when the first core network device, the second core network device, and the third core network device are session management function devices, the first value indicates duration of a session established by the terminal device, or the first value indicates remaining duration in which the terminal device is allowed to establish a session.

According to a ninth aspect, a communication apparatus is provided, including at least one processor. A memory is configured to store a computer program. When the communication apparatus runs, the processor executes the computer program or the instructions stored in the memory, so that the communication apparatus performs the method according to any possible implementation of the first aspect to the fourth aspect. The memory may be located in the processor, or may be implemented by using a chip independent of the processor. This is not specifically limited in this application.

According to a tenth aspect, a computer-readable storage medium is provided. The computer-readable storage medium includes a computer program. When the computer program is run on a computer, the computer is enabled to perform the method according to any possible implementation of the first aspect to the fourth aspect.

According to an eleventh aspect, a chip is provided. A processing circuit is disposed on the chip, and the processing circuit is configured to perform the method according to any possible implementation of the first aspect to the fourth aspect.

According to a twelfth aspect, a computer program product is provided. The computer program product includes: a computer program (which may also be referred to as code or instructions). When the computer program is run, a computer is enabled to perform the method according to any possible implementation of the first aspect to the fourth aspect.

### BRIEF DESCRIPTION OF DRAWINGS

FIG. 1 shows an architecture of a communication system to which an embodiment of this application is applicable;
FIG. 2 shows an onboarding architecture to which an embodiment of this application is applicable;
FIG. 3A and FIG. 3B are a schematic interaction diagram of an example of a method according to this application;
FIG. 4 is a schematic interaction diagram of another example of a method according to this application;
FIG. 5 is a schematic interaction diagram of another example of a method according to this application;
FIG. 6 is a schematic block diagram of a communication device according to this application; and
FIG. 7 is another schematic block diagram of a communication device according to this application.

### DESCRIPTION OF EMBODIMENTS

The following describes technical solutions of this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

The technical solutions in embodiments of this application may be applied to various communication systems, for example, a narrowband internet of things (narrowband internet of things, NB-IoT) system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a satellite communication system, and a future 6th generation (6th generation, 6G) system.

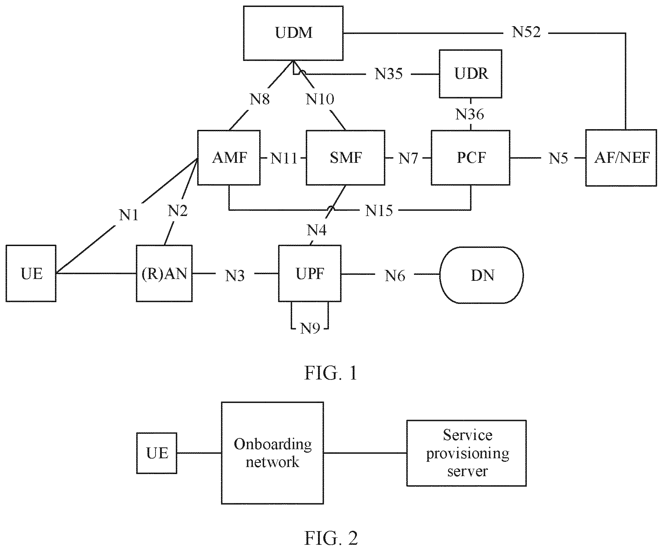

The technical solutions provided in this application may be applied to a system architecture shown in FIG. 1. The following describes network elements that may be included in the system architecture shown in FIG. 1.

### 1. User equipment (user equipment, UE)

The UE may also be referred to as a terminal device, an access terminal, a terminal device unit (subscriber unit), a terminal device station, a mobile console, a mobile station (mobile station, MS), a remote station, a remote terminal, a mobile device, a user terminal, a terminal (terminal), a wireless communication device, a terminal device agent, or a terminal device apparatus. The terminal device may include various handheld devices, vehicle-mounted devices, internet of things (internet of things, IoT) devices, wearable devices, computing devices, or other processing devices connected to a wireless modem that have a wireless communication function. The terminal device may further include a user unit, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or a station (station, ST) in a wireless local area network (wireless local area network, WLAN). The terminal device may be a cellular phone, a cordless telephone, a session initiation protocol (session initiation protocol, SIP) telephone, a wireless local loop (wireless local loop, WLL) station, and a next-generation communication system, for example, a terminal device in a 5G network, or a terminal device in a future evolved PLMN network.

### 2. Access network device

The access network device is a device that provides a wireless communication function for a terminal device. For example, the access network device may be an access point (access point, AP) in a WLAN, a base transceiver station (base transceiver station, BTS) in a GSM or CDMA, a NodeB (NodeB, NB) in WCDMA, a gNB in a new radio (new radio, NR) system, an evolved NodeB (evolved NodeB, eNB, or eNodeB) in LTE, or a radio access network (radio access network, RAN) device in a 5G network.

### 3. User plane network element

The user plane network element is configured to perform packet routing and forwarding, quality of service (quality of service, QoS) processing of user plane data, and the like.

In a 5G communication system, the user plane network element may be a user plane function (user plane function, UPF) network element. In a future communication system, the user plane network element may still be the UPF network element, or may have another name. This is not limited in this application.

### 4. Data network

The data network is a network for data transmission.

In a 5G communication system, the data network may be a data network (data network, DN). In a future communication system, the data network may still be the DN, or may have another name. This is not limited in this application.

### 5. Access management network element

The access management network element is mainly used for mobility management, access management, and the like, and may be configured to implement functions, for example, lawful interception and access authorization/authentication, other than session management in functions of a mobility management entity (mobility management entity, MME).

In a 5G communication system, the access management network element may be an access and mobility management function (access and mobility management function, AMF) network element or an access and mobility management function device. In a future communication system, the access and mobility management network element may still be the AMF network element, or may have another name. This is not limited in this application. The access and mobility management function device may be a core network device.

### 6. Session management network element

The session management network element is mainly configured to: manage a session, assign and manage an Internet protocol (Internet protocol, IP) address of a terminal device, select an endpoint that can manage a user plane function interface and a policy control and charging function interface, notify downlink data, and the like.

In a 5G communication system, the session management network element may be a session management function (session management function, SMF) network element or a session management function device. In a future communication system, the session management network element may still be the SMF network element, or may have another name. This is not limited in this application. The session management function device may be a core network device.

### 7. Policy control network element

The policy control network element is configured to: guide a unified policy framework of network behavior, provide policy rule information for a control plane function network element (for example, an AMF network element or an SMF network element), and the like.

In a 4G communication system, the policy control network element may be a policy and charging rules function (policy and charging rules function, PCRF) network element. In a 5G communication system, the policy control network element may be a policy control function (policy control function, PCF) network element or a policy control function device. In a future communication system, the policy control network element may still be the PCF network element, or may have another name. This is not limited in this application. The policy control function device may be a core network device.

### 8. Unified data repository (unified data repository, UDR) network element

The UDR network element is configured to: provide subscription data for an UDM network element or obtain subscription data from an UDM network element; provide policy data for a PCF network element or obtain policy data from a PCF network element; and the like. In a future communication system, the UDR network element may also be referred to as a unified data repository function device, or may have another name. This is not limited in this application. The unified data repository function device may be a core network device.

### 9. Data management network element

The data management network element is configured to: process a terminal device identifier, perform access authentication, registration, and mobility management, and the like.

In a 5G communication system, the data management network element may be a unified data management (unified data management, UDM) network element or a unified data management device. In a future communication system, the unified data management network element may still be the UDM network element, or may have another name. This is not limited in this application. The unified data management device may be a core network device.

### 10. Network exposure function network element

The network exposure function network element is mainly configured to securely expose a service and a capability provided by a 3GPP network function, including internally exposing the service and the capability, exposing the service and the capability to a third party, or the like.

In a 5G communication system, the network exposure function network element may be the network exposure function (network exposure function, NEF) network element, or a network exposure function device. In a future communication system, the network exposure function network element may still be the NEF network element, or may have another name. This is not limited in this application. The network exposure function device may be a core network device.

### 11. Application function (application function, AF) network element

The AF network element is configured to implement information exchange between an external server and a 3GPP network.

It may be understood that the network elements or the functions may be network elements in a hardware device, may be software functions running on dedicated hardware, or may be virtualized functions instantiated on a platform (for example, a cloud platform).

### 12. Network repository function (network repository function, NRF) network element

The NRF network element may also be referred to as a network storage function device, a network repository function device, or a network repository function network element. The function network element may support a service discovery function. A network element discovery request is received from a network element function or a service communication proxy (SCP), and discovered network element function information may be fed back. In addition, the network element function is also responsible for maintaining information about available network functions and services supported by the network functions. A so-called discovery procedure is a process in which a demanding network element function (NF) assists the NRF in addressing a specific NF or a specific service. The NRF provides an IP address, an FQDN, or an URI of a corresponding NF instance or a corresponding NF service instance. The NRF may further implement an inter-PLMN discovery procedure by providing a network identifier (for example, a public land mobile network identifier, PLMN ID). To implement addressing and discovery of network element functions, each network element needs to be registered in the NRF. Some network element functions may be registered in the NRF when the network element functions run for the first time. The network storage function device may be a core network device.

Functions of interfaces are described as follows:
1. N1 represents an interface between the AMF and the UE, is access-agnostic, and is configured to transfer a QoS control rule to the UE, and the like.
2. N2 represents an interface between the AMF and the RAN, and is configured to transfer radio bearer control information from a core network side to the RAN, and the like.
3. N4 represents an interface between the SMF and the UPF, and is configured to transfer information between a control plane and a user plane, including delivery of a forwarding rule, a QoS control rule, a traffic statistics rule, and the like from the control plane to the user plane, and reporting of user plane information.
4. N5 represents an interface between the AF and the PCF, and is configured to: deliver an application service request, and report a network event.
5. N7 represents an interface between the PCF and SMF, and is configured to deliver a PDU session granularity control policy and a service data flow granularity control policy.
6. N8 represents an interface between the AMF and the UDM, and is used by the AMF to obtain access and mobility management-related subscription data and authentication data from the UDM, used by the AMF to register current mobility management-related information of the UE with the UDM, and the like.
7. N10 represents an interface between the SMF and the UDM, and is used by the SMF to obtain session management-related subscription data from the UDM, used by the SMF to register current session related information of the UE with the UDM, and the like.
8. N11 represents an interface between the SMF and the AMF, and is configured to: transfer PDU session tunnel information between the RAN and the UPF, transfer a control message to be sent to the UE, transfer radio resource control information to be sent to the RAN, and the like.
9. N15 represents an interface between the PCF and the AMF, and is configured to deliver a UE policy and an access control-related policy.
10. N35 represents an interface between the UDM and the UDR, and is used by the UDM to obtain user subscription data information from the UDR.
11. N36 represents an interface between the PCF and the UDR, and is used by the PCF to obtain policy-related subscription data and application data-related information from the UDR.
12. N52 represents an interface between the UDM and the NEF, and is used by the NEF to expose a network capability to a third-party application function. For example, the third-party application function subscribes to a reachability event of all users in a specific group from the UDM through the NEF.

The following describes some terms in this application.

### 1. Non-public network (non-public network, NPN)

The NPN is a network that is different from a public network and provides a service for a specific user. The NPN may be classified into two types: a standalone NPN (standalone NPN, SNPN) and a public network integrated NPN (public network integrated NPN, PNI-NPN).

A core network of the SNPN is independent of a public land mobile network (public land mobile network, PLMN). The PNI-NPN may be understood as a PLMN, but the PLMN provides an NPN service by providing a special slice and/or network data.

### 2. Onboarding

As shown in FIG. 2, when UE does not obtain subscription data (for example, a credential "credential" for authentication) for accessing a non-public network, the UE needs to access an onboarding network by using a default credential (default credential) or a PLMN credential. After the UE successfully accesses (or registers with) the onboarding network, a service provisioning server (provisioning server, PVS) provides, through the onboarding network, the UE with subscription data (for example, a credential) for accessing an NPN.

The following describes a scenario to which the solutions provided in this application are applicable.

To access an NPN, UE may first access an onboarding network, and obtain subscription data for accessing the NPN. After the UE accesses the onboarding network, an AMF performs onboarding on the UE. The AMF supports an onboarding function. The AMF is referred to as an S-AMF below. When the S-AMF cannot continue to perform onboarding on the UE, or an AMF that serves the UE needs to be replaced due to factors such as load balancing or a radio resource status in an onboarding network, handover needs to be performed. The solutions provided in this application are used to select a new AMF (where the new AMF is referred to as a T-AMF below) when handover is performed, and continue to perform onboarding on the UE.

A reason why the S-AMF cannot continue to perform onboarding on the UE may be any one of the following:
1. The UE moves out of a service area of the S-AMF.
2. The S-AMF is damaged or faulty and cannot work properly.
3. A load of the S-AMF is excessively heavy, and the S-AMF is no longer suitable for performing onboarding on the UE for load balancing.
4. A radio resource of an access network device (where the access network device is referred to as an S-RAN below) served by the S-AMF is insufficient. In consideration of a radio resource status, the access network device is no longer suitable for serving the UE. Therefore, the access network device needs to be replaced. In the following, a replaced access network device is referred to as a T-RAN. The AMF (referred to as the T-AMF below) serving the T-RAN is different from the S-AMF. Therefore, the AMF needs to be replaced.

The following describes in detail the solutions of this application by using an example in which the UE moves out of the service area of the S-AMF. It should be understood that, in a possible implementation, an access network device that serves the UE also changes, and the access network device changes from a second access network device to a first access network device.

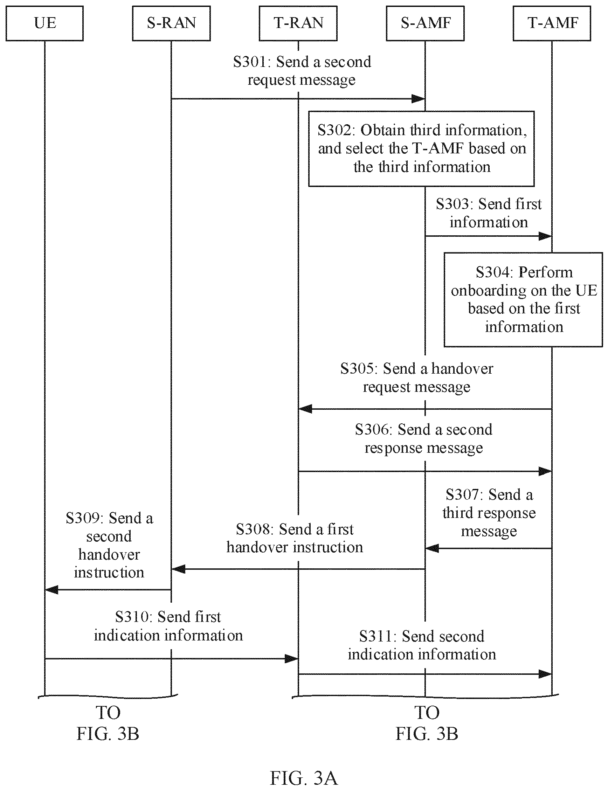

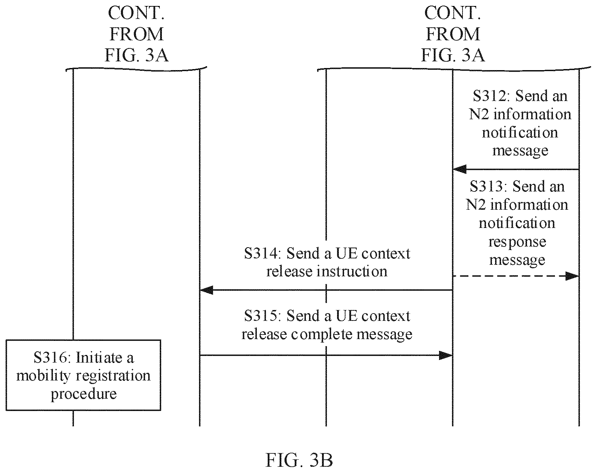

FIG. 3A and FIG. 3B show a solution according to this application. In this case, UE is in a radio resource control (radio resource control, RRC) connected state.

S301: When an S-RAN (an example of a second access network device) determines that a T-RAN (an example of a first access network device) is more suitable for serving the UE, the S-RAN sends a second request message to an S-AMF (an example of a second core network device), where the second request message is used to request to hand over a RAN that serves the UE from the S-RAN to the T-RAN, and correspondingly, the S-AMF receives the second request message.

In a possible implementation, the second request message includes an identifier of the T-RAN, and a source to target transparent container (source to target transparent container).

The identifier of the T-RAN is used to identify the T-RAN. The source to target transparent container is created by the S-RAN, and the container includes information that needs to be used by the T-RAN.

S302: When the S-AMF cannot serve the UE, the S-AMF obtains third information, and selects a T-AMF (an example of a first core network device) based on the third information, where the T-AMF supports an onboarding function.

The third information indicates the UE to perform onboarding. It should be understood that, that the third information indicates the UE to perform onboarding means that the third information indicates that a purpose of accessing a network by the UE is onboarding.

That is, the S-AMF determines, based on the third information, that an AMF that supports the onboarding function needs to be selected for the UE, and then selects the T-AMF.

The following describes several manners in which the S-AMF obtains the third information.

### Manner 1:

The S-AMF obtains the third information from the UE.

In a possible implementation, the UE may send an AN message to the S-RAN, where the AN message includes a NAS registration request message. The third information may be carried in the NAS registration request message. For example, the third information may be registration type information, and the registration type information indicates the UE to perform onboarding. In a possible implementation, a registration type may be one or more of the following registration types: an onboarding (Onboarding) registration type, a standalone non-public network onboarding (SNPN Onboarding) registration type, a mobility registration update with onboarding (Mobility Registration Update with Onboarding) registration type, a mobility registration update with standalone non-public network onboarding (Mobility Registration Update with SNPN Onboarding) registration type, and a mobility registration update (Mobility Registration Update) registration type.

The S-RAN may send the NAS registration request message to the S-AMF.

The S-AMF obtains the third information from the NAS registration request message.

### Manner 2:

In a possible implementation, the S-AMF locally obtains the third information. The third information includes one or more of the following:
registration type information of the UE, data network name (data network name, DNN) information, network slice information (network slice selection assistance information, NSSAI), and information about a first value.

The registration type information of the UE indicates the UE to perform onboarding. In a possible implementation, a registration type of the UE may be one or more of the following registration types: an onboarding registration type (Onboarding), a standalone non-public network onboarding registration type (SNPN Onboarding), a mobility registration update with onboarding (Mobility Registration Update with Onboarding) registration type, a mobility registration update with standalone non-public network onboarding (Mobility Registration Update with SNPN Onboarding) registration type, and a mobility registration update (Mobility Registration Update) registration type.

In a possible implementation, the first value indicates duration in which the UE has registered with an onboarding network, or indicates remaining duration in which the UE is allowed to register with an onboarding network. For example, the first value may be a current value of a timer. A type of the timer may be a positive timer or a countdown timer. This is not limited in this application.

That is, the registration type information of the UE may also explicitly or implicitly indicate the UE to perform onboarding, and the data network name, the slice information, and the first value may all implicitly indicate the UE to perform onboarding.

It should be understood that, in a possible implementation, after registering with the onboarding network, the UE may establish a specific session by using a specific DNN and/or specific NSSAI. The session is limited to performing only onboarding. In a possible implementation, the session may be a packet data unit (packet data unit, PDU) session.

It should be understood that, in a possible implementation, the data network name, the network slice information, and the first value may be UE context information.

S303: The S-AMF sends first information to the T-AMF, and correspondingly, the T-AMF receives the first information, where the first information indicates the UE to perform onboarding.

In a possible implementation, the first information may be carried in a third request message, and the third request message is used to request to set up a UE context.

In a possible implementation, the third request message may include identification information of the T-RAN, information about the source to target transparent container (source to target transparent container), and the UE context information, where the UE context information includes an identifier of the UE, for example, a subscription permanent identifier (subscription permanent identifier, SUPI) of the UE.

In a possible implementation, the first information may be explicit indication information, that is, the S-AMF directly indicates the UE to perform onboarding.

In another possible implementation, the first information may be implicit indication information. In this case, the first information includes one or more of the following:
data network name information, network slice information, and the information about the first value.

In another possible implementation, the first information may include both the explicit indication information and the implicit indication information.

S304: The T-AMF performs onboarding on the UE based on the first information.

It should be understood that the T-AMF determines, based on the first information, that the UE is UE that performs onboarding, and performs onboarding on the UE.

In other words, the T-AMF may replace the S-AMF to continue to perform onboarding on the UE.

In addition, in a process in which the T-AMF performs onboarding on the UE, to avoid a problem that network resources are occupied because the UE always camps on or registers with the onboarding network, the T-AMF may further perform an operation in the following manner.

### Manner 1:

When the first information includes information about the first value, the T-AMF may start a first timer, and set a start value of the first timer to the first value.

When the first value indicates the duration in which the UE has registered with the network, the first timer may be a positive timer. When a value of the first timer increases to a first threshold, the T-AMF performs a deregistration procedure of the UE. In a possible implementation, the first threshold indicates a longest time in which the UE can register with (or camp on) the onboarding network. In another possible implementation, the first threshold may be greater than, equal to, or less than duration in which the UE changes from an RRC connected mode to an RRC idle mode or to an RRC inactive mode.

When the first value indicates the remaining duration in which the UE is allowed to register with the network, the first timer may be a countdown timer. When the value of the first timer decreases to a second threshold, the T-AMF performs the deregistration procedure of the UE.

In a possible implementation, the second threshold may be zero.

### Manner 2:

The T-AMF may start a second timer.

When the second timer is a positive timer, the T-AMF may set a start value of the second timer to zero or a second threshold. When a value of the second timer increases to a first threshold, the T-AMF performs a deregistration procedure of the UE.

When the second timer is a countdown timer, the T-AMF may set the start value of the second timer to the first threshold. When the value of the second timer decreases to the second threshold or zero, the T-AMF performs the deregistration procedure of the UE.

It should be understood that information about the first threshold and information about the second threshold may be preconfigured in the T-AMF. Alternatively, the T-AMF may obtain second information from the S-AMF, where the second information indicates the first threshold and/or the second threshold.

It should be understood that an objective of performing the deregistration procedure of the UE by the T-AMF is to deregister the UE from the onboarding network, so that the UE does not camp on or register with the onboarding network, and therefore, does not always occupy a network resource.

S305: The T-AMF determines the T-RAN based on the identification information of the T-RAN, and sends a handover request message to the T-RAN, and correspondingly, the T-RAN receives the handover request message.

In a possible implementation, the handover request message includes the information about the source to target transparent container.

S306: The T-RAN sends a second response message to the T-AMF, where the second response message is used to respond to the handover request message; and correspondingly, the T-AMF receives the second response message.

In a possible implementation, the second response message includes the information about the target to source transparent container, and the information about the target to source transparent container includes UE container information. The UE container information includes access stratum information and non-access stratum information.

S307: The T-AMF sends a third response message to the S-AMF, where the third response message is used to respond to the third request message; and correspondingly, the S-AMF receives the third response message.

In a possible implementation, the third response message includes the information about the target to source transparent container.

S308: The S-AMF sends a first handover instruction to the S-RAN, and correspondingly, the S-RAN receives the first handover instruction.

In a possible implementation, the first handover instruction includes the information about the target to source transparent container.

S309: The S-RAN sends a second handover instruction to the UE, and correspondingly, the UE receives the second handover instruction.

In a possible implementation, the second handover instruction includes the UE container information. It should be understood that, in a possible implementation, the UE container information includes the identification information of the T-RAN.

S310: The UE performs handover according to the second handover instruction, and when the UE is successfully handed over to the T-RAN, the UE sends first indication information to the T-RAN, and correspondingly, the T-RAN receives the first indication information.

In a possible implementation, the first indication information indicates that the UE successfully performs handover.

S311: The T-RAN sends second indication information to the T-AMF, and correspondingly, the T-AMF receives the second indication information.

In a possible implementation, the second indication information indicates that the T-RAN successfully performs handover.

S312: The T-AMF sends an N2 information notification message to the S-AMF, and correspondingly, the S-AMF receives the N2 information notification message.

Optionally, the method further includes: S313: The S-AMF sends an N2 information notification response message to the T-AMF, and correspondingly, the T-AMF receives the N2 information notification response message.

S314: The S-AMF starts a third timer based on the N2 information notification message, and after the third timer expires, the S-AMF sends a UE context release instruction to the S-RAN, and correspondingly, the S-RAN receives the UE context release instruction.

For example, when a value of the third timer increases to a third threshold or decreases to a fourth threshold, the S-AMF sends the UE context release instruction to the S-RAN.

S315: When the S-RAN releases the UE context according to the UE context release instruction, the S-RAN sends a UE context release complete message to the S-AMF.

S316: The UE initiates a mobility registration procedure.

The procedure includes the following steps.

The UE sends an AN message to the T-RAN, where the AN message includes an AN parameter and a NAS registration request message, and correspondingly, the T-RAN receives the AN message. The NAS registration request message includes registration type information, and the registration type information indicates that the registration type of the UE is mobility registration update.

The T-RAN sends the NAS registration request message to the T-AMF, and correspondingly, the T-AMF receives the NAS registration request message.

Then, the T-AMF performs an authentication procedure for the UE. After the authentication succeeds, the T-AMF sends a registration success message to the UE.

The UE sends a registration complete message to the T-AMF.

In a possible implementation, the T-AMF may start the first timer or the second timer at step S304 or at any moment after step S304.

According to the solution of this application, when a terminal device is in an RRC connected mode, and the S-AMF cannot perform onboarding on the terminal device, the S-AMF may select a T-AMF that supports the onboarding function. When the S-AMF cannot perform onboarding on the terminal device, an AMF selected by the S-AMF may not support the onboarding function. Therefore, according to the solution in this application, the T-AMF can continue to perform onboarding on the terminal device. In addition, when performing onboarding on the terminal device, the T-AMF may start a specific timer, so as to prevent the terminal device from always camping on an onboarding network. This improves network resource utilization.

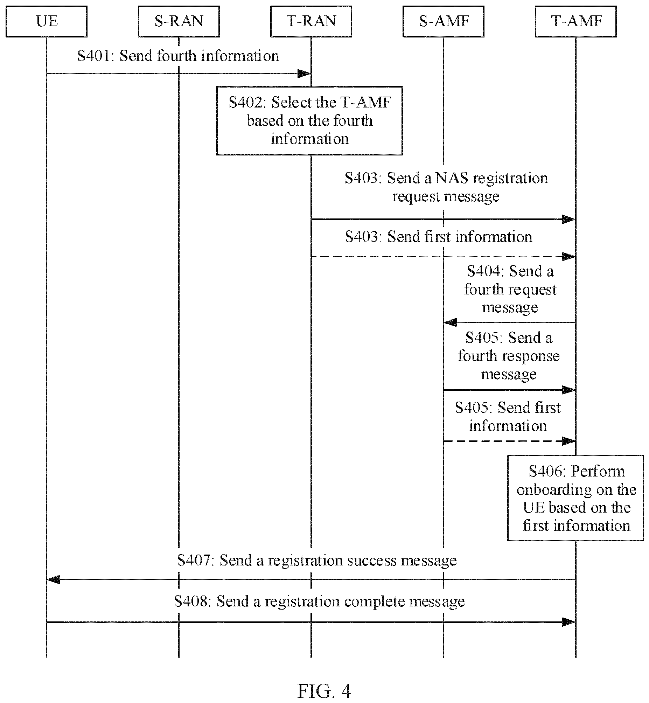

FIG. 4 shows another solution according to this application. In this case, UE is in an RRC idle mode.

S401: The UE sends fourth information to a T-RAN, where the fourth information indicates the UE to perform onboarding, and correspondingly, the T-RAN receives the fourth information.

In a possible implementation, the fourth information may be carried in an access network (access network, AN) message.

In a possible implementation, the fourth information may implicitly indicate the UE to perform onboarding. For example, a field may be added to a 5G system temporary mobile subscription identifier (5G system temporary mobile subscription identifier, 5G-S-TMSI), or some fields in the 5G-S-TMSI may be set to specific values, to implicitly indicate the UE to perform onboarding.

In another possible implementation, the fourth information may explicitly indicate the UE to perform onboarding.

The AN message may further include a NAS registration request message, where the NAS registration request message includes registration type information, and the registration type information indicates that a registration type of the UE is mobility registration update. In a possible implementation, the NAS registration request message further includes a temporary identity allocated by the S-AMF to the UE, for example, a 5G globally unique temporary identity (5G globally unique temporary identity, 5G-GUTI).

S402: The T-RAN selects a T-AMF based on the fourth information, where the T-AMF supports an onboarding function.

It should be understood that the T-RAN determines, based on the fourth information, that the UE is UE that performs onboarding, and selects, for the UE, a T-AMF that supports the onboarding function.

S403: The T-RAN sends the NAS registration request message to the T-AMF, and correspondingly, the T-AMF receives the NAS registration request message.

In a possible implementation, the T-RAN may further send first information to the T-AMF. For example, the first information may be carried in an N2 message. The first information indicates the UE to perform onboarding.

S404: The T-AMF sends a fourth request message to the S-AMF, where the fourth request message is used to request UE context information, and correspondingly, the S-AMF receives the fourth request message.

S405: The S-AMF sends a fourth response message to the T-AMF, where the fourth response message is used to respond to the fourth request message, and the fourth response message includes the UE context information; and correspondingly, the T-AMF receives the fourth response message.

Optionally, the S-AMF sends the first information to the T-AMF, where the first information indicates the UE to perform onboarding. For example, the first information is carried in the fourth response message for sending.

In a possible implementation, the first information may be explicit indication information, that is, the S-AMF directly indicates the UE to perform onboarding.

In another possible implementation, the first information may be implicit indication information. In this case, the first information includes one or more of the following:
data network name information, network slice information, and information about a first value.

In another possible implementation, the first information may include both the explicit indication information and the implicit indication information.

S406: The T-AMF performs onboarding on the UE based on the first information.

This process is the same as that in S304. For details, refer to descriptions in S304. In a possible implementation, the T-AMF may start a first timer or a second timer at step S406 or at any moment after step S406.

S407: Then, an authentication procedure is performed for the UE, and after the authentication succeeds, the T-AMF sends a registration success message to the UE.

In a possible implementation, the registration success message further includes a temporary identity allocated by the T-AMF to the UE. For example, the temporary identity may be a 5G-GUTI. The temporary identity indicates that the UE is UE that performs onboarding.

In addition, the T-AMF sends a registration status update message to the S-AMF. The registration status update message indicates that the UE successfully registers at the T-AMF.

S408: The UE sends a registration complete message to the T-AMF.

According to the solution of this application, when a terminal device is in an RRC idle mode, and the S-AMF cannot perform onboarding on the terminal device, the T-RAN may select a T-AMF that supports the onboarding function. When the S-AMF cannot perform onboarding on the terminal device, an AMF selected by the T-RAN may not support the onboarding function. Therefore, according to the solution in this application, the T-AMF can continue to perform onboarding on the terminal device. In addition, when performing onboarding on the terminal device, the T-AMF may start a specific timer, so as to prevent the terminal device from always camping on an onboarding network. This improves network resource utilization.

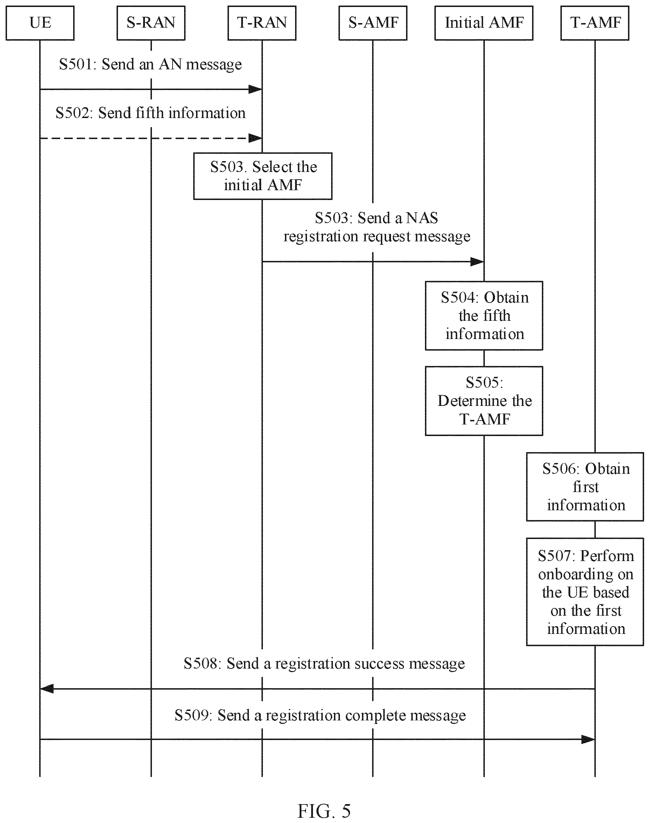

FIG. 5 shows another solution according to this application. In this case, UE is in an RRC idle mode.

S501: The UE sends an AN message to a T-RAN. The AN message includes an AN parameter and a NAS registration request message.

For example, the AN parameter may include a 5G-S-TMSI and/or a globally unique AMF identifier (globally unique AMF identifier, GUAMI).

The NAS registration request message includes registration type information, and the registration type information indicates that a registration type of the UE is mobility registration update. Optionally, the NAS registration request message may further include a temporary identity of the UE. The temporary identity of the UE is allocated by an S-AMF to the UE.

In a possible implementation, the method further includes: S502: The UE sends fifth information to the T-RAN, where the fifth information is carried in the NAS registration request message, and the fifth information indicates that the terminal device performs onboarding, and correspondingly, the T-RAN receives the fifth information.

The following describes manners of carrying the fifth information in the NAS registration request message.

### Manner 1:

A field is added to the temporary identity (for example, a 5G-GUTI) of the UE, to indicate the terminal device to perform onboarding.

### Manner 2:

Some fields in the temporary identity (for example, a 5G-GUTI) of the UE are set to specific values, to indicate the terminal device to perform onboarding.

### Manner 3:

The NAS registration request message includes indication information to indicate the terminal device to perform onboarding.

### Manner 4:

The registration type is newly added to the registration type information, to indicate the terminal device to perform onboarding. In this case, the registration type information may indicate that the registration type of the UE is onboarding and mobility registration update. In a possible implementation, the registration type may be one or more of the following registration types: an onboarding registration type (Onboarding), a standalone non-public network onboarding registration type (SNPN Onboarding), a mobility registration update with onboarding (Mobility Registration Update with Onboarding) registration type, a mobility registration update with standalone non-public network onboarding (Mobility Registration Update with SNPN Onboarding) registration type, and a mobility registration update (Mobility Registration Update) registration type.

It should be understood that a manner in which first information is carried in the NAS registration request message is not limited in this application.

S503: The T-RAN selects an initial AMF (an example of a third core network device), and sends the NAS registration request message to the initial AMF.

It should be understood that when the method includes S502, because the T-RAN does not parse the NAS registration request message, the T-RAN does not learn that the terminal device performs onboarding. Therefore, when selecting the initial AMF, the T-RAN may select an AMF that does not support an onboarding function.

S504: The initial AMF obtains the fifth information, where the fifth information indicates the UE to perform onboarding.

The following describes manners in which the initial AMF obtains the fifth information.

### Manner 1:

When the method includes S502, the initial AMF obtains the fifth information from the NAS registration request message.

### Manner 2:

The initial AMF obtains the fifth information from the S-AMF.

For example, the initial AMF sends a fourth request message to the S-AMF, where the fourth request message is used to request UE context information, and correspondingly, the S-AMF receives the fourth request message.

In a possible implementation, the S-AMF carries the fifth information in a fourth response message, and sends the fourth response message to the initial AMF, where the fourth response message is used to respond to the fourth request message. The fourth response message includes the UE context information. Correspondingly, the initial AMF receives the fourth response message.

In a possible implementation, the fifth information may be explicit indication information, that is, the S-AMF directly indicates, to the initial AMF, that the UE performs onboarding.

In another possible implementation, the fifth information may be implicit indication information. In this case, the fifth information includes one or more of the following:
data network name information, network slice information, and information about a first value.

In another possible implementation, the fifth information may include both the explicit indication information and the implicit indication information.

It should be understood that, in a possible implementation, after registering with an onboarding network, the UE may establish a specific session by using a specific DNN and/or specific NSSAI. The session is limited to performing only onboarding. In a possible implementation, the session may be a packet data unit (packet data unit, PDU) session.

When the initial AMF does not support the onboarding function, the method further includes: S505: The initial AMF determines a T-AMF, where the T-AMF supports an onboarding capability.

In addition, the initial AMF may further send rejection indication information to the S-AMF, to indicate that an S-AMF registration procedure is not completed at the initial AMF.

It should be understood that, after obtaining the fifth information, the initial AMF may perform determining. If the initial AMF supports the onboarding function, the initial AMF may perform onboarding on the UE. If the initial AMF does not support the onboarding function, the initial AMF may continue to determine the T-AMF.

The following describes manners in which the initial AMF determines the T-AMF.

### Manner 1:

The initial AMF determines the T-AMF based on a preconfigured capability information of at least one AMF network element.

### Manner 2:

The initial AMF sends a first request message to a network repository function (network repository function, NRF) network element (an example of a fourth core network device), where the first request message is used to request to obtain an AMF supporting the onboarding function.

In a possible implementation, the first request message includes information about a set of AMFs.

The NRF network element sends a first response message to the initial AMF, where the first response message includes information about the T-AMF. For example, the first response message includes identification information and/or address information of the T-AMF.

In a possible implementation, the NRF network element may determine the T-AMF from the set of AMFs included in the first request message.

The initial AMF determines the T-AMF based on the first response message.

S506: The T-AMF obtains the first information, where the first information indicates the UE to perform onboarding.

The following describes manners in which the T-AMF obtains the first information.

### Manner 1:

The initial AMF sends the first information to the T-AMF, and correspondingly, the T-AMF receives the first information.

For example, the initial AMF may send an N1 message notification message to the T-AMF. The N1 message notification message includes one or more of a NAS message, identification information of the UE, and the UE context information. When the method includes S502, the first information is the fifth information carried in the NAS message. Alternatively, the UE context information may include one or more of the data network name information, the network slice information, and the information about the first value, and the data network name information, the network slice information, and the first value may all implicitly indicate the UE to perform onboarding.

It should be understood that, in a possible implementation, after registering with the onboarding network, the UE may establish a specific session by using a specific DNN and/or specific NSSAI. The session is limited to performing only onboarding. In a possible implementation, the session may be a packet data unit (packet data unit, PDU) session.

### Manner 2:

The S-AMF sends the first information to the T-AMF, and correspondingly, the T-AMF receives the first information.

For example, the T-AMF sends the fourth request message to the S-AMF, where the fourth request message is used to request the UE context information. The S-AMF may carry the first information in the fourth response message, and send the fourth response message to the T-AMF. The fourth response message includes the UE context information.

In a possible implementation, the first information may be explicit indication information, that is, the S-AMF directly indicates the UE to perform onboarding.

In another possible implementation, the first information may be implicit indication information. In this case, the first information includes one or more of the following:
data network name information, network slice information, and the information about the first value.

It should be understood that, in a possible implementation, after registering with the onboarding network, the UE may establish a specific session by using a specific DNN and/or specific NSSAI. The session is limited to performing only onboarding. In a possible implementation, the session may be a packet data unit (packet data unit, PDU) session.

In another possible implementation, the first information may include both the explicit indication information and the implicit indication information.

S507: The T-AMF performs onboarding on the UE based on the first information.

This process is the same as that in S304. For details, refer to descriptions in S304.

S508: Then, an authentication procedure is performed for the UE, and after the authentication succeeds, the T-AMF sends a registration success message to the UE.

In a possible implementation, the registration success message further includes a temporary identity allocated by the T-AMF to the UE. For example, the temporary identity may be a 5G-GUTI. The temporary identity indicates that the UE is UE that performs onboarding.

In addition, the T-AMF sends a registration status update message to the S-AMF. The registration status update message indicates that the UE successfully registers at the T-AMF.

S509: The UE sends a registration complete message to the T-AMF.

According to the solution of this application, when the terminal device is in the RRC idle mode, and the S-AMF cannot perform onboarding on the terminal device, the T-RAN may select the initial AMF according to an existing mechanism. When the initial AMF does not support the onboarding function, the initial AMF further determines the T-AMF. When the S-AMF cannot perform onboarding on the terminal device, an AMF selected by the T-RAN may not support the onboarding function. Therefore, according to the solution in this application, the T-AMF can continue to perform onboarding on the terminal device. In addition, when performing onboarding on the terminal device, the T-AMF may start a specific timer, so as to prevent the terminal device from always camping on an onboarding network. This improves network resource utilization.

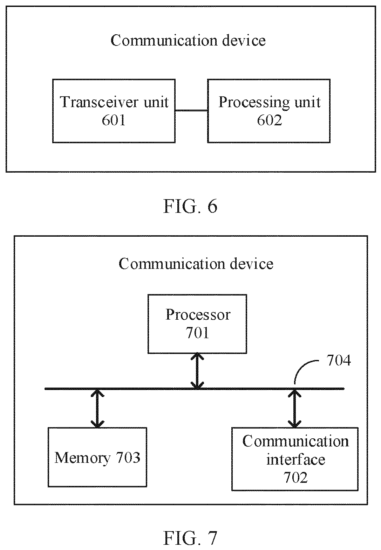

According to the foregoing method, FIG. 6 shows a communication device according to an embodiment of this application. The communication device includes a transceiver unit 601 and a processing unit 602. The transceiver unit 601 may be configured to implement receiving and sending functions in the method embodiments. Other functions in the method embodiments may be implemented by using the processing unit 602. The transceiver unit may be implemented by using an input interface and an output interface in a data processing chip. Sending and receiving in the method embodiment respectively correspond to an output and an input in the chip. The transceiver unit 601 may be further split into a receiving unit and a sending unit. The receiving unit may be configured to implement a receiving function in the method embodiment, and the sending unit may be configured to implement a sending function in the method embodiment. The receiving unit may be implemented by using the output interface in the data processing chip, and the sending unit may be implemented by using the input interface of the data processing chip. In addition, the transceiver unit and the processing unit may be implemented by using a same chip. This is not limited in this application. It should be understood that the transceiver unit 601 in this embodiment of this application may be alternatively implemented by a transceiver (including a transmitter and a receiver) or a transceiver-related circuit component, and the processing unit 602 may be alternatively implemented by a processor or a processor-related circuit component (or referred to as a processing circuit).

For example, when the communication device is an S-AMF, the transceiver unit 601 and the processing unit 602 can support actions completed by the S-AMF in the foregoing method example. For example, the transceiver unit 601 may complete receiving the second request message in the foregoing method embodiment and another process in the technical solution described in this specification. The processing unit 602 may complete selecting the T-AMF based on the third information and another process in the technical solution described in this specification.

For example, when the communication device is a T-AMF, the transceiver unit 601 and the processing unit 602 can support actions completed by the T-AMF in the foregoing method example. For example, the transceiver unit 601 may complete receiving the first information in the foregoing method embodiment and another process in the technical solution described in this specification. The processing unit 602 may complete performing onboarding on the UE based on the first information and another process in the technical solution described in this specification.

For example, when the communication device is an initial AMF, the transceiver unit 601 and the processing unit 602 can support actions completed by the initial AMF in the foregoing method example. For example, the transceiver unit 601 may complete receiving the NAS registration request message in the foregoing method embodiment and another process in the technical solution described in this specification. The processing unit 602 may complete determining the T-AMF and another process in the technical solution described in this specification.

For example, when the communication device is an S-RAN, the transceiver unit 601 and the processing unit 602 can support actions completed by the S-RAN in the foregoing method example. For example, the transceiver unit 601 may complete sending the second request message in the foregoing method embodiment and another process in the technical solution described in this specification. The processing unit 602 may complete releasing the UE context and another process in the technical solution described in this specification.

For example, when the communication device is a T-RAN, the transceiver unit 601 and the processing unit 602 can support actions completed by the T-RAN in the foregoing method example. For example, the transceiver unit 601 may complete receiving the fourth information in the foregoing method embodiment and another process in the technical solution described in this specification. The processing unit 602 may complete selecting the T-AMF based on the fourth information and another process in the technical solution described in this specification.

An embodiment of this application further provides a communication apparatus, as shown in FIG. 7, including a processor 701, a communication interface 702, and a memory 703. The processor 701, the communication interface 702, and the memory 703 may be connected to each other through a bus 707. The bus 707 may be a peripheral component interconnect (peripheral component interconnect, PCI) bus, an extended industry standard architecture (extended industry standard architecture, EISA) bus, or the like. The bus 707 may be classified into an address bus, a data bus, a control bus, and the like. For ease of representation, only one thick line is used to represent the bus in FIG. 7, but this does not mean that there is only one bus or only one type of bus. The processor 701 may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 703 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 701 is configured to implement a data processing operation of the communication apparatus. The communication interface 702 is configured to implement receiving and sending operations of the communication apparatus.

For example, when the communication apparatus is an S-AMF, the processor 701, the communication interface 702, and the memory 703 can support actions completed by the S-AMF in the foregoing method example. For example, the communication interface 702 may complete receiving the second request message in the foregoing method embodiment and another process in the technical solution described in this specification. The processor 701 may complete selecting the T-AMF based on the third information and another process in the technical solution described in this specification.

For example, when the communication apparatus is a T-AMF, the processor 701, the communication interface 702, and the memory 703 can support actions completed by the T-AMF in the foregoing method example. For example, the communication interface 702 may complete receiving the second request message in the foregoing method embodiment and another process in the technical solution described in this specification. The processor 701 may complete determining ACR subscription status information of an EEC and another process in the technical solution described in this specification.

For example, when the communication apparatus is an initial AMF, the processor 701, the communication interface 702, and the memory 703 can support actions completed by the initial AMF in the foregoing method example. For example, the communication interface 702 may complete receiving the NAS registration request message in the foregoing method embodiment and another process in the technical solution described in this specification. The processor 701 may complete determining the T-AMF and another process in the technical solution described in this specification.

For example, when the communication apparatus is an S-RAN, the processor 701, the communication interface 702, and the memory 703 can support actions completed by the S-RAN in the foregoing method example. For example, the communication interface 702 may complete sending the second request message in the foregoing method embodiment and another process in the technical solution described in this specification. The processor 701 may complete releasing the UE context and another process in the technical solution described in this specification.

For example, when the communication apparatus is a T-RAN, the processor 701, the communication interface 702, and the memory 703 can support actions completed by the T-RAN in the foregoing method example. For example, the communication interface 702 may complete receiving the fourth information in the foregoing method embodiment and another process in the technical solution described in this specification. The processor 701 may complete selecting the T-AMF based on the fourth information and another process in the technical solution described in this specification.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for performing onboarding, comprising:
obtaining, by a first core network device, first information, wherein the first information indicates that a terminal device performs onboarding, the first core network device is a core network device that serves the terminal device after the terminal device performs handover, and the first core network device supports an onboarding function; and
performing, by the first core network device, onboarding on the terminal device based on the first information.

2. The method according to claim 1, wherein
the obtaining, by a first core network device, first information comprises:
obtaining, by the first core network device, the first information from a second core network device, wherein the second core network device is a core network device that serves the terminal device before the terminal device performs handover; or
obtaining, by the first core network device, the first information from a first access network device, wherein the first access network device is an access network device that serves the terminal device after the terminal device performs handover; or
obtaining, by the first core network device, the first information from the terminal device; or
obtaining, by the first core network device, the first information from a third core network device, wherein the third core network device is a core network device initially selected when the terminal device performs handover, and the third core network device does not support an onboarding function.

3. The method according to claim 1 or 2, wherein
the first information comprises one or more of the following:
data network name information, network slice information, and information about a first value, wherein
the first value indicates duration in which the terminal device has registered with a network, or the first value indicates remaining duration in which the terminal device is allowed to register with a network.

4. The method according to claim 3, wherein
when the first information comprises the information about the first value, the method further comprises:
starting, by the first core network device, a first timer, wherein a start value of the first timer is the first value; and
when a value of the first timer increases to a first threshold, performing, by the first core network device, a deregistration procedure of the terminal device, wherein the value of the first timer indicates the duration in which the terminal device has registered with the network; or
when a value of the first timer decreases to a second threshold, performing, by the first core network device, a deregistration procedure of the terminal device, wherein the value of the first timer indicates the remaining duration in which the terminal device is allowed to register with the network.

5. The method according to any one of claims 1 to 3, wherein
the method further comprises:
starting, by the first core network device, a second timer; and
when a value of the second timer increases to a first threshold or decreases to a second threshold, performing, by the first core network device, a deregistration procedure of the terminal device.

6. The method according to claim 4 or 5, wherein
information about the first threshold and/or information about the second threshold are/is preconfigured; or
the method further comprises:
obtaining, by the first core network device, second information from the second core network device, wherein the second information indicates the first threshold and/or the second threshold.

7. The method according to any one of claims 1 to 6, wherein the first core network device is an access and mobility management function device.

8. The method according to claim 2, wherein the second core network device is an access and mobility management function device.

9. A method for performing onboarding, comprising:
selecting, by a second core network device, a first core network device based on third information, wherein the third information indicates that a terminal device performs onboarding, and the first core network device supports an onboarding function, wherein
the second core network device is a core network device that serves the terminal device before the terminal device performs handover, and the first core network device is a core network device that serves the terminal device after the terminal device performs handover; and
sending, by the second core network device, first information to the first core network device, wherein the first information indicates that the terminal device performs onboarding, so that the first core network device performs onboarding on the terminal device based on the first information.

10. The method according to claim 9, wherein
the third information comprises one or more of the following:
registration type information, data network name information, network slice information, and information about a first value, wherein
the first value indicates duration in which the terminal device has registered with a network, or the first value indicates remaining duration in which the terminal device is allowed to register with a network.

11. The method according to claim 9, wherein
the method further comprises:
obtaining, by the second core network device, the third information from a second access network device or the terminal device, wherein the second access network device is an access network device that serves the terminal device before the terminal device performs handover.

12. The method according to any one of claims 9 to 11, wherein
the first information comprises one or more of the following:
data network name information, network slice information, and the information about the first value, wherein
the first value indicates the duration in which the terminal device has registered with the network, or the first value indicates the remaining duration in which the terminal device is allowed to register with the network.

13. The method according to any one of claims 9 to 12, wherein the first core network device and/or the second core network device are/is an access and mobility management function device.

14. A first core network device, comprising:
a transceiver unit, configured to obtain first information, wherein the first information indicates that a terminal device performs onboarding, the first core network device is a core network device that serves the terminal device after the terminal device performs handover, and the first core network device supports an onboarding function; and
a processing unit, configured to perform onboarding on the terminal device based on the first information.

15. The device according to claim 14, wherein
that the transceiver unit is configured to obtain the first information comprises:
the transceiver unit is configured to obtain the first information from a second core network device, wherein the second core network device is a core network device that serves the terminal device before the terminal device performs handover; or
the transceiver unit is configured to obtain the first information from a first access network device, wherein the first access network device is an access network device that serves the terminal device after the terminal device performs handover; or
the transceiver unit is configured to obtain the first information from the terminal device; or
the transceiver unit is configured to obtain the first information from a third core network device, wherein the third core network device is a core network device initially selected when the terminal device performs handover, and the third core network device does not support an onboarding function.

16. The device according to claim 14 or 15, wherein
the first information comprises one or more of the following:
data network name information, network slice information, and information about a first value, wherein
the first value indicates duration in which the terminal device has registered with a network, or the first value indicates remaining duration in which the terminal device is allowed to register with a network.

17. The device according to claim 16, wherein
when the first information comprises the information about the first value, the processing unit is further configured to:
start a first timer, wherein a start value of the first timer is the first value; and
when a value of the first timer increases to a first threshold, perform a deregistration procedure of the terminal device, wherein the value of the first timer indicates the duration in which the terminal device has registered with the network; or
when a value of the first timer decreases to a second threshold, perform a deregistration procedure of the terminal device, wherein the value of the first timer indicates the remaining duration in which the terminal device is allowed to register with the network.

18. The device according to any one of claims 14 to 16, wherein
the processing unit is further configured to:
start a second timer; and
when a value of the second timer increases to a first threshold or decreases to a second threshold, perform a deregistration procedure of the terminal device.

19. The device according to claim 17 or 18, wherein
information about the first threshold and/or information about the second threshold are/is preconfigured; or
the transceiver unit is further configured to obtain second information from the second core network device, wherein the second information indicates the first threshold and/or the second threshold.

20. The device according to any one of claims 14 to 19, wherein the first core network device is an access and mobility management function device.

21. The device according to claim 15, wherein the second core network device is an access and mobility management function device.

22. A second core network device, comprising:
a processing unit, configured to select a first core network device based on third information, wherein the third information indicates that a terminal device performs onboarding, and the first core network device supports an onboarding function, wherein
the second core network device is a core network device that serves the terminal device before the terminal device performs handover, and the first core network device is a core network device that serves the terminal device after the terminal device performs handover; and
a transceiver unit, configured to send first information to the first core network device, wherein the first information indicates that the terminal device performs onboarding, so that the first core network device performs onboarding on the terminal device based on the first information.

23. The device according to claim 22, wherein
the third information comprises one or more of the following:
registration type information, data network name information, network slice information, and information about a first value, wherein
the first value indicates duration in which the terminal device has registered with a network, or the first value indicates remaining duration in which the terminal device is allowed to register with a network.

24. The device according to claim 22, wherein
the transceiver unit is further configured to obtain the third information from a second access network device or the terminal device, wherein the second access network device is an access network device that serves the terminal device before the terminal device performs handover.

25. The device according to any one of claims 22 to 24, wherein
the first information comprises one or more of the following:
data network name information, network slice information, and the information about the first value, wherein
the first value indicates the duration in which the terminal device has registered with the network, or the first value indicates the remaining duration in which the terminal device is allowed to register with the network.

26. The device according to any one of claims 22 to 25, wherein the first core network device and/or the second core network device are/is an access and mobility management function device.

27. A communication device, comprising a processor and a memory, wherein the processor is configured to execute a computer program or instructions stored in the memory, so that the communication device performs the method according to any one of claims 1 to 8; or so that the communication device performs the method according to any one of claims 9 to 13.

28. A computer-readable storage medium, comprising a computer program or instructions, wherein when the computer program or the instructions are run on a computer,
the computer is enabled to perform the method according to any one of claims 1 to 8; or
the computer is enabled to perform the method according to any one of claims 9 to 13.

29. A chip system, comprising at least one processor, wherein the processor is configured to execute a computer program or instructions in a memory, so that the method according to any one of claims 1 to 8 is implemented; or so that the method according to any one of claims 9 to 13 is implemented.
